# EUROPÄISCHE PATENTSCHRIFT

(11) **EP 2 347 131 B1**
(45) Veröffentlichungstag und Bekanntmachung des Hinweises auf die Patenterteilung: **28.11.2012**
(21) Anmeldenummer: 09781288.7
(22) Anmeldetag: 30.07.2009
(51) Int. Cl.: F04C 18/344, F04C 29/12

(54) **VAKUUMPUMPE**
VACUUM PUMP
POMPE À VIDE

(30) Priorität: 20.11.2008 DE 102008059228
(43) Veröffentlichungstag der Anmeldung: 27.07.2011
(73) Patentinhaber: Joma-Polytec GmbH, 72411 Bodelshausen (DE)
(72) Erfinder: HESS, Bernd, 72622 Nürtingen (DE); SCHNEIDER, Willi, 72411 Bodelshausen (DE)
(74) Vertreter: Dreiss
(86) Internationale Anmeldenummer: PCT/EP2009/059868
(87) Internationale Veröffentlichungsnummer: WO 2010/057690

(56) Entgegenhaltungen:
- EP-A1- 1 972 785
- WO-A1-03/071135
- WO-A1-2007/116216
- WO-A1-2008/009251
- DE-A1- 2 904 686
- DE-A1- 10 158 343

## Beschreibung

Die Erfindung betrifft eine Vakuumpumpe, insbesondere eine Flügelzellenpumpe, mit einem Pumpengehäuse, in welchem ein Saugraum vorgesehen ist, und einem in den Saugraum einmündenden Pumpengehäusedurchbruch, wobei im Pumpengehäusedurchbruch ein ins Freie oder in einen externen Unterdruckraum mündendes Saug-Rückschlagventil angeordnet ist, welches in einem topförmigen Ventilgehäuse untergebracht ist und das topfförmige Ventilgehäuse einen Gehäuseboden und einen Gehäusemantel aufweist.

Aus der WO 2008/009251 A1 ist eine Vakuumpumpe mit einem derartigen Aufbau bekannt geworden. Mit dieser Vakuumpumpe wird Luft aus einem Unterdruckraum, zum Beispiel einem Bremskraftverstärker, abgesaugt, wobei der Saugraum innerhalb der Vakuumpumpe von Flügelzellen gebildet wird. Um eine Rückströmung zu verhindern, ist die Vakuumpumpe mit einem Saug-Rückschlagventil ausgestattet, welches in einem Pumpengehäusedurchbruch angeordnet ist. Dieses Saug-Rückschlagventil ist hülsenartig ausgebildet und besitzt ein topfförmiges Ventilgehäuse mit einem Gehäusemantel und einem Gehäuseboden, wobei der Gehäuseboden in das Pumpengehäuse der Vakuumpumpe eingesetzt ist. Auf das freie Ende des Saug-Rückschlagventils, welches aus dem Pumpengehäuse der Vakuumpumpe herausragt, wird zum Beispiel ein Unterdruckschlauch aufgeschoben. Die Abdichtung des Saug-Rückschlagventils im Pumpengehäusedurchbruch erfolgt zum Beispiel mittels Dichtungselementen, zum Beispiel O-Ringen. Bei der oben genannten bekannten Vakuumpumpe ist in den Gehäusemantel des Saug-Rückschlagventils ein Haltekörper eingesetzt, welcher zur Halterung des Ventilkörpers dient.

Aus der WO 03/071135 A1, die den oberbegriff von Anspruch 1 offenbart, ist ein Saugrückschlagventil für eine Vakuumpumpe bekannt. Aus der WO 2007/116216 A1 ist eine Vakuumpumpe mit einem Rückschlagventil bekannt. Ferner offenbart die EP 1 972 785 A1 ein Rückschlagventil für eine Vakuumpumpe.

Als nachteilig wird angesehen, dass das Saug-Rückschlagventil, insbesondere dessen Ventilgehäuse, mehrteilig aufgebaut ist, und dass der Ventilkörper an einem separaten Bauteil, nämlich dem Haltekörper, befestigt ist. Eine schnelle und einfache, insbesondere automatisierte, Montage wird dadurch erschwert.

Der Erfindung liegt daher die Aufgabe zugrunde, eine Vakuumpumpe, insbesondere ein Saug-Rückschlagventil, bereitzustellen, welche beziehungsweise welches einen vereinfachten Aufbau aufweist.

Diese Aufgabe wird mit einer Vakuumpumpe der eingangs genannten Art erfindungsgemäß durch die Merlmale von Anspruch 1 gelöst.

Die Erfindung betrifft also eine Vakuumpumpe mit einem Saug-Rückschlagventil, bei welchem der Gehäuseboden nicht als separates Bauteil, insbesondere als Haltekörper für den Ventilkörper, ausgebildet ist, sondern einstückig mit dem Gehäusemantel verbunden ist. Zum einen muss bei der Montage der Gehäuseboden nicht mehr in den Gehäusemantel lagerichtig eingesetzt werden, zum anderen bildet der einstückig am Gehäusemantel angeformte Gehäuseboden ein definiertes Halteelement für den Ventilkörper, so dass dieser eine definierte und exakte Position einnehmen kann. Anders als beim Stand der Technik muss vom Ventilkörper kein Haltekörper mehr in Position gehalten werden. Eine einfache automatisierte Montage ist daher problemlos möglich, da das Ventilgehäuse des Saug-Rückschlagventils lediglich mit dem Ventilkörper bestückt werden muss, d.h. dass der Ventilkörper lediglich in das Ventilgehäuse eingesetzt werden muss.

Zur exakten Position des Ventilkörpers weist der Gehäuseboden des Ventilgehäuses eine Aufnahme für einen Halteabschnitt des Ventilkörpers auf. Der Halteabschnitt des Ventilkörpers wird an der Aufnahme befestigt, so dass der Ventilkörper sicher am Gehäuseboden anliegt und dadurch gewährleistet wird, dass der Ventilkörper die im Gehäuseboden sich befindenden Ventilöffnungen vollständig verschließen beziehungsweise während des Saugbetriebes freigeben kann.

Bei einer bevorzugten Ausführungsform ist die Aufnahme als Durchbruch ausgebildet. Dabei kann die Aufnahme den Gehäuseboden vollständig durchsetzen, was den Vorteil hat, dass die Aufnahme relativ einfach, z.B. in Form einer Bohrung hergestellt werden kann. Außerdem wird dadurch auch die Montage erleichtert, da der Halteabschnitt lediglich in die Aufnahme eingesetzt beziehungsweise eingesteckt werden muss.

Eine relativ einfache und daher bevorzugte Variante sieht vor, dass die Aufnahme einen hohlzylindrischen, insbesondere einen kreiszylindrischen, Querschnitt aufweist. Die Aufnahme wird zum Beispiel von einer Bohrung oder Ausstanzung gebildet, in welche ein zapfen- oder noppenartiger Halteabschnitt, der ebenfalls einen zylinderförmigen Querschnitt besitzt, eingesetzt beziehungsweise eingesteckt wird. Eine Verrastung des Zapfens in der Aufnahme erfolgt nicht.

Da die Aufnahme erfindungsgemäß hinterschneidungsfrei ausgebildet ist, kann eine einfache automatische Montage erfolgen, ohne dass Rastverbindungen oder Verrastungen zwischen der Aufnahme und dem Ventilkörper hergestellt werden müssen.

Bevorzugt besteht der Ventilkörper aus einem elastischen, insbesondere gummielastischen Material, so dass sich dieser vollständig an die Öffnungen im Gehäuseboden anschmiegen und diese abdichten kann. Es ist auch denkbar, den Ventilkörper aus Federstahl, gegebenenfalls mit einer Beschichtung als Dichtungselement herzustellen.

Bei einer Weiterbildung ist vorgesehen, dass der Boden des topfförmigen Ventilgehäuses einen den Gehäusemantel über den Gehäuseboden hinaus fortsetzenden Rand aufweist und in den vom den Gehäuseboden überragenden Rand gebildeten Zwischenraum eine Haltescheibe eingepresst ist. Die Haltescheibe, welche ebenfalls von Öffnungen durchsetzt ist, bildet ein Sicherungselement, welches das Ventilelement am Gehäuseboden festhält. Die Montage der Haltescheibe erfolgt lediglich dadurch, dass diese in den Zwischenraum, der vom Rand umgeben ist, eingepresst und dadurch verliersicher gehalten wird. Die Haltescheibe besitzt ein geringfügiges Übermaß und wird durch das Einpressen verformt und verklemmt im Zwischenraum.

Das Ventilelement ist zwischen dem Gehäuseboden und der Haltescheibe angeordnet und wird von der Haltescheibe am Gehäuseboden festgehalten. Dabei drückt die Haltescheibe den Halteabschnitt in die Aufnahme des Gehäusebodens ein und fixiert dadurch das Ventilelement.

Weitere Vorteile, Merkmale und Einzelheiten der Erfindung ergeben sich aus den Unteransprüchen sowie der nachfolgenden Beschreibung, in der unter Bezugnahme auf die Zeichnung ein besonders bevorzugtes Ausführungsbeispiel im Einzelnen beschrieben ist. Dabei können die in der Zeichnung dargestellten sowie in der Beschreibung und in den Ansprüchen erwähnten Merkmale jeweils einzeln für sich oder in beliebiger Kombination erfindungswesentlich sein.

In der Zeichnung zeigen:
- Figur 1: einen Längsschnitt I-I gemäß Figur 3 durch ein Saug-Rückschlagventil, welches in ein andeutungsweise dargestelltes Gehäuse einer Vakuumpumpe eingesetzt ist;
- Figur 2: eine Seitenansicht des Ventils gemäß Figur 1;
- Figur 3: eine Ansicht in Richtung des Pfeils III gemäß Figur 2; und
- Figur 4: eine Ansicht in Richtung des Pfeils IV gemäß Figur 2.

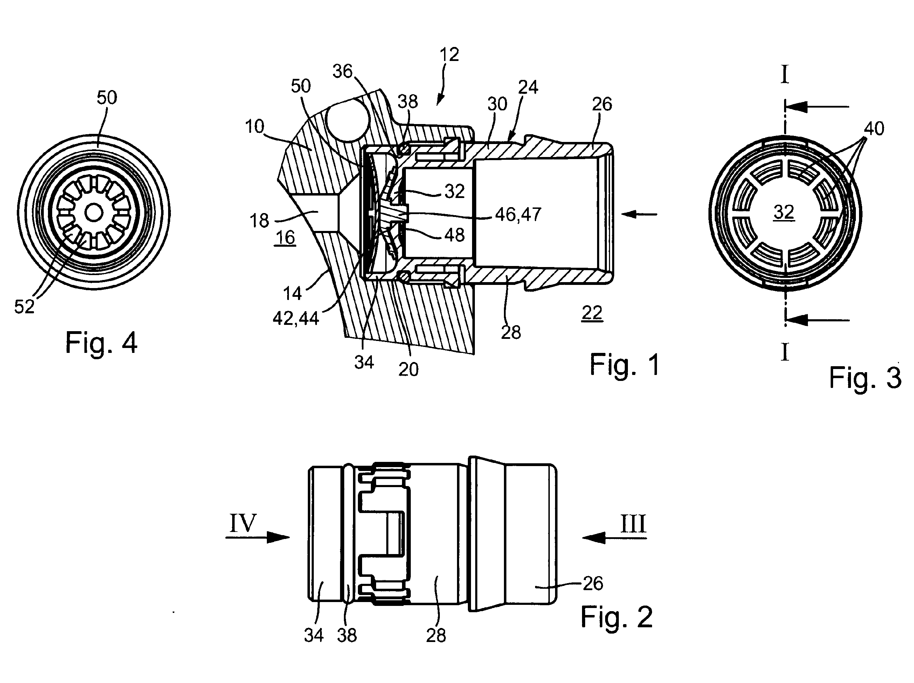

Die Figur 1 zeigt andeutungsweise einen Abschnitt eines insgesamt mit 10 bezeichneten Pumpengehäuses einer Vakuumpumpe 12, wobei mit 14 die Innenumfangsfläche eines Saugraums 16 bezeichnet ist. In diesen Saugraum 16 mündet ein Kanal 18 eines Pumpengehäusedurchbruchs 20, welcher ins Freie 22 ausmündet. In diesen Pumpengehäusedurchbruch 20 ist ein Saug-Rückschlagventil 24 eingesetzt, auf dessen freies Ende 26 ein (nicht dargestellter) Saugschlauch aufgeschoben werden kann. Das im Längsschnitt dargestellte Saug-Rückschlagventil 24 besitzt ein Ventilgehäuse 28, welches topfförmig ausgebildet ist und im Wesentlichen von einem Gehäusemantel 30 und einem Gehäuseboden 32 gebildet wird. Der Gehäusemantel 30 erstreckt sich über den Gehäuseboden 32 hinaus in einen Rand 34, welcher den Gehäuseboden 32 auf dessen gegenüberliegenden Seite überragt. Zur fluiddichten Aufnahme des Saug-Rückschlagventils 24 im Pumpengehäusedurchbruch 20 ist das Ventilgehäuse 28 mit einer Umfangsnut 36 versehen, in welche ein Dichtungsring 38, insbesondere ein O-Ring, eingesetzt ist.

Der Gehäuseboden 32, welcher auch in Figur 3 erkennbar ist, ist mit Durchbrüchen 40 versehen, welche das Überströmen von Luft in Richtung des Saugraums 16 erlauben. Diese Durchbrüche 40 werden auf der dem Saugraum 16 zugewandten Seite des Gehäusebodens 32 von einem elastischen Ventilkörper 42 abgedeckt, so dass Luft lediglich in Richtung des Saugraums 16 strömen kann, wenn der Ventilkörper 42 abhebt und die Durchbrüche 40 frei gibt. Der Ventilkörper 42 ist rotationssymmetrisch aufgebaut und weist eine die Durchbrüche 40 abdeckende im Wesentlichen kegelförmige Kappe 44 auf, welche an einem zentralen Halteabschnitt 46, im dargestellten Ausführungsbeispiel einem Zapfen 47 angeordnet ist. Dieser Zapfen 47 durchgreift eine Aufnahme 48 im Gehäuseboden 32, wobei die Aufnahme 48 als kreiszylindrische Bohrung ausgebildet ist. Die Aufnahme 48 sowie der Zapfen 47 sind hinterschneidungsfrei ausgebildet, so dass der Zapfen 47 problemlos in die Aufnahme 48 eingesteckt und aus dieser wieder herausgezogen werden kann.

Zur Lagesicherung des Ventilkörpers 42, insbesondere des Zapfens 47 in der Aufnahme 48, dient ein Halteelement, insbesondere eine Haltescheibe 50, welche in den vom Rand 34 umgebenen Zwischenraum eingepresst ist. Die Haltescheibe 50 besitzt also ein geringes Übermaß gegenüber dem Umfang des vom Rand 34 umgrenzten Zwischenraumes. Die Haltescheibe 50 besitzt ebenfalls Durchbrüche 52, welche aus Figur 4 erkennbar sind, durch welche Luft in Richtung des Saugraum 16 abgesaugt werden kann. Zur exakten Fixierung des Ventilkörpers 42 am Gehäuseboden 32 ist die Haltescheibe 50 so weit eingepresst, dass ihr zentraler Bereich am Ventilkörper 42 gegenüber des Zapfens 47 anliegt und dadurch den Zapfen 47 in der Aufnahme 48 hält. Zwischen dem geringfügig kegelförmigen Gehäuseboden 42 und der Haltescheibe 50 befindet sich ein genügend großer Freiraum, in welchen die Kappe 44 ausgelenkt werden kann, wenn diese von den Durchbrüchen 40 beim Ansaugen von Luft abgehoben wird.

Die einstückige Ausgestaltung des Ventilgehäuses 28 mit einteiligem Gehäusemantel 30 und Gehäuseboden 32 erlaubt eine schnelle und einfache Montage des Ventilkörpers 42, der mit dem Gehäuseboden 32 nicht verrastet ist und lediglich von der Haltescheibe 50 am Gehäuseboden 32 gehalten wird.

## Patentansprüche

1. Vakuumpumpe (12), insbesondere Flügelzellenpumpe, mit einem Pumpengehäuse (10), in welchem ein Saugraum (16) vorgesehen ist, und einem in den Saugraum (16) einmündenden Pumpengehäusedurchbruch (20), in dem ein ins Freie (22) oder in einen externen Unterdruckraum mündendes Saug-Rückschlagventil (24) angeordnet ist, welches in einem topfförmigen Ventilgehäuse (28) untergebracht ist, und das topfförmige Ventilgehäuse (28) einen Gehäuseboden (32) und einen Gehäusemantel (30) aufweist, welche einstückig ausgebildet sind, **dadurch gekennzeichnet, dass** der Gehäuseboden (32) des topfförmigen Ventilgehäuses (28) einen den Gehäusemantel (30) über den Gehäuseboden (32) hinaus fortsetzenden Rand (34) aufweist und in den vom den Gehäuseboden (32) überragenden Rand (34) gebildeten Zwischenraum eine Haltescheibe (50) eingepresst ist und der Ventilkörper (42) zwischen dem Gehäuseboden (32) und der Haltescheibe (50) angeordnet ist.

2. Vakuumpumpe nach Anspruch 1, **dadurch gekennzeichnet, dass** der Gehäuseboden (32) eine Aufnahme (48) für einen Halteabschnitt (46) eines Ventilkörpers (42) aufweist.

3. Vakuumpumpe nach Anspruch 2, **dadurch gekennzeichnet, dass** die Aufnahme (48) als Durchbruch ausgebildet ist.

4. Vakuumpumpe nach Anspruch 2 oder 3, **dadurch gekennzeichnet, dass** die Aufnahme (48) den Gehäuseboden (32) vollständig durchsetzt.

5. Vakuumpumpe nach einem der Ansprüche 2 bis 4, **dadurch gekennzeichnet, dass** die Aufnahme (48) einen hohlzylindrischen, insbesondere einen kreiszylindrischen, Querschnitt aufweist.

6. Vakuumpumpe nach einem der Ansprüche 2 bis 5, **dadurch gekennzeichnet, dass** die Aufnahme (48) hinterschneidungsfrei ausgebildet ist.

7. Vakuumpumpe nach einem der Ansprüche 2 bis 6, **dadurch gekennzeichnet, dass** der Ventilkörper (42) aus einem elastischen, insbesondere gummielastischen, Material oder aus Edelstahl, insbesondere Federstahl besteht.

8. Vakuumpumpe nach einem der Ansprüche 2 bis 7, **dadurch gekennzeichnet, dass** der Halteabschnitt (46) zapfenartig, insbesondere zylinderförmig, ausgebildet ist.

9. Vakuumpumpe nach einem der vorhergehenden Ansprüche, **dadurch gekennzeichnet, dass** die Haltescheibe (50) den Halteabschnitt im Gehäuseboden (32) hält.

## Claims

1. A vacuum pump (12), in particular a vane cell pump, having a pump housing (10) in which a suction space (16) is defined, and having a pump housing passage (20) opening into the suction space (16), a suction non-return valve (24) disposed in said pump housing passage, said valve opening to an outside or into an external vacuum space, said valve is disposed in a pot-shaped valve housing (28) having a housing bottom (32) and a housing jacket (30), being integrally constructed, **characterized in that** said housing bottom (32) of said pot-shaped valve housing (28) has an edge (34) that extends said housing jacket (30) beyond said housing bottom (32), and a holding disk (50) that is pressed into an intermediate space formed by said edge (34) that protrudes beyond said housing bottom (32), and a valve body (42) is disposed between said housing bottom (32) and said holding disk (50).

2. The vacuum pump according to claim 1, **characterized in that** said housing bottom (32) has a mounting location (48) for a holding section (46) of said valve body (42).

3. The vacuum pump according to claim 2, **characterized in that** said mounting location (48) is constituted as an opening.

4. The vacuum pump according to claim 2 or 3, **characterized in that** said mounting location (48) penetrates said housing bottom (32) totally.

5. The vacuum pump according to one of claims 2 to 4, **characterized in that** said mounting location (48) has a hollow cylindrical, in particular a circular cylindrical cross-section.

6. The vacuum pump according to one of claims 2 to 5, **characterized in that** said mounting location (48) is constituted without undercuts.

7. The vacuum pump according to one of claims 2 to 6, **characterized in that** said valve body (42) consists of an elastic, in particular a rubber-elastic material, or of stainless steel, in particular of spring steel.

8. The vacuum pump according to one of claims 2 to 7, **characterized in that** said holding section (46) is constituted in the shape of a pin, in particular in the shape of a cylinder.

9. The vacuum pump according to one of the preceding claims, **characterized in that** said holding disk (50) retains said holding section in said housing bottom (32).

## Revendications

1. Pompe à vide (12), plus particulièrement une pompe à palettes, avec un carter de pompe (10) dans lequel une chambre d'aspiration (16) est prévue, et une percée dans le carter de pompe (20) débouchant dans la chambre d'aspiration (16), dans laquelle se trouve un clapet anti-retour d'aspiration (24) débouchant à l'air libre (22) ou dans une chambre de dépression externe, logé dans un boîtier de clapet en forme de cloche (28) et ce boîtier de clapet (28) comprend un fond de boîtier (32) et une enveloppe de boîtier (30), conçus d'une seule pièce, **caractérisée en ce que** le fond (32) du boîtier de clapet en forme de cloche (28) comprend un rebord (34) continuant l'enveloppe du boîtier (30) au-delà du fond du boîtier (32) et, dans l'espace intermédiaire formé par le rebord (34) dépassant du fond du boîtier (32), est insérée une rondelle de maintien (50) et le corps du clapet (42) est disposé entre le fond du boîtier (32) et la rondelle de maintien (50).

2. Pompe à vide selon la revendication 1, **caractérisée en ce que** le fond du boîtier (32) comprend un logement (48) pour une section de maintien (46) d'un corps de clapet (42).

3. Pompe à vide selon la revendication 2, **caractérisée en ce que** le logement (48) est réalisé comme une percée.

4. Pompe à vide selon la revendication 2 ou 3, **caractérisée en ce que** le logement (48) traverse entièrement le fond du boîtier (32).

5. Pompe à vide selon l'une des revendications 2 à 4, **caractérisée en ce que** le logement (48) présente une section cylindrique creuse, plus particulièrement une section cylindrique circulaire.

6. Pompe à vide selon l'une des revendications 2 à 5, **caractérisée en ce que** le logement (48) est réalisé sans contre-dépouille.

7. Pompe à vide selon l'une des revendications 2 à 6, **caractérisée en ce que** le corps du clapet (42) est constitué d'un matériau élastique, plus particulièrement de type caoutchouc ou d'acier inoxydable, plus particulièrement d'acier ressort.

8. Pompe à vide selon l'une des revendications 2 à 7, **caractérisée en ce que** la section de maintien (46) est réalisé sous la forme d'un axe, plus particulièrement de forme cylindrique.

9. Pompe à vide selon l'une des revendications précédentes, **caractérisé en ce que** la rondelle de maintien (50) maintient la section de maintien dans le fond du boîtier (32).
